# EUROPEAN PATENT APPLICATION

(11) **EP 3 132 968 A1**
(43) Date of publication of application: **22.02.2017**
(21) Application number: 16184393.3
(22) Date of filing: 16.08.2016
(51) Int. Cl.: B60N 2/14, B60N 2/20

(54) **VEHICLE SEAT AND VEHICLE**

(30) Priority: 21.08.2015 JP 2015164085
(71) Applicant: Toyota Jidosha Kabushiki Kaisha, Toyota-shi, Aichi-ken, 471-8571 (JP)
(72) Inventor: AKIMOTO, Takashi, TOYOTA-SHI, AICHI-KEN, 471-8571 (JP)
(74) Representative: Intès, Didier Gérard André

(57) **Abstract**

In a vehicle seat (20), a seat cushion (22) is coupled to a floor section (10) so as to be capable of swiveling. When the vehicle seat (20) swivels, a seatback (24) is swiveled by a first swivel mechanism (40) from a first upright position toward the seat front side and disposed in a second upright position, and is swiveled from the second upright position toward a seat rear side. The swivel angle of the seatback (24) is set so as to avoid interference between the seatback (24) and other members of the vehicle during swiveling of the vehicle seat (20). This thereby enables interference between the seatback (24) and other members of the vehicle to be avoided during swiveling of the vehicle seat (20).

## Description

### BACKGROUND

### Technical Field

The present invention relates to a vehicle seat and a vehicle.

### Related Art

Recently, various technology has been proposed relating to an autonomous driving aid device for a vehicle (automobile). In a vehicle provided with such an autonomous driving aid device it is conceivable that, for example, a front seat (a driving seat or a front passenger seat) might be swiveled so as to face the vehicle rear side, to achieve a seat layout in which the front seat and a rear seat are disposed facing each other. It is therefore preferable to configure a vehicle seat as a swiveling seat, so as to be capable of swiveling inside the vehicle cabin while an occupant remains seated on the seat.

Japanese Patent Application Laid-Open (JP-A) No. H02-074427 (Patent Document 1) describes a swiveling vehicle seat. In this vehicle seat, the vehicle seat is configured so as to be capable of swiveling to a state facing toward the vehicle rear side by tilting (reclining) a seatback toward the seat front side. Thus when, for example, the vehicle seat is swiveled, from a state in which the vehicle seat faces toward the vehicle front side to a state in which the vehicle seat faces toward the vehicle rear side, via a state in which the vehicle seat faces toward the vehicle width direction central side, interference of the seatback with a door trim of a side door, or the like, can be avoided. In particular, in vehicles with a comparatively small vehicle width direction dimension, due to a space at the seat rear side of the seatback becoming narrower when the vehicle seat is swiveled to a position facing toward the vehicle width direction central side, this approach is advantageous (also, see JP-A No. H09-183324 (Patent Document 2) and Japanese Patent No. 4517882 (Patent Document 3)).

However, in the vehicle seat described in Patent Document 1, there is room for improvement with regard to securing ease-of-use for an occupant. Namely, in the vehicle seat mentioned above, supposing the vehicle seat is swiveled while a seated occupant remains seated on the vehicle seat, there is a need to swivel the vehicle seat while the seated occupant checks for interference between the seatback and other members, such as the door trim. The seated occupant would thereby be inconvenienced when the vehicle seat is being swiveled, with the possibility of impeding the ease-of-use for the seated occupant.

### SUMMARY

In consideration of the above circumstances, an object of the present invention is to provide a vehicle seat capable of securing ease-of-use and swiveling while a seated occupant remains seated on the vehicle seat, and to provide a vehicle including such a vehicle seat.

A vehicle seat according to a first aspect of the present invention includes: a seat cushion that is coupled to a floor section of a vehicle so as to be capable of swiveling about an axial direction in a seat vertical direction and that supports the posterior of a seated occupant; a seatback that is coupled to a rear end portion of the seat cushion so as to be capable of swiveling about an axial direction in a seat width direction and that supports the back of the seated occupant; and a first swivel mechanism that is coupled to the seatback, that retains the seatback in a first upright position upright with respect to the seat cushion, and that, during swiveling of the seat cushion, swivels the seatback from the first upright position to a second upright position raised toward a seat front side and swivels the seatback from the second upright position toward a seat rear side.

In the vehicle seat configured as described above, the seat cushion supporting the posterior of the seated occupant is coupled to the floor section of the vehicle so as to be capable of swiveling about an axial direction in a seat vertical direction, i.e. capable of swiveling around an axis parallel to the seat vertical direction. The seatback that supports the back of the seated occupant is coupled to the rear end portion of the seat cushion, and the seatback is coupled to the seat cushion so as to be capable of swiveling about the axial direction in the seat width direction, i.e. capable of swiveling around an axis parallel to the seat width direction.

The first swivel mechanism is coupled to the seatback, and the seatback is retained in the first upright position by the first swivel mechanism. When the seat cushion (the vehicle seat) is being swiveled with respect to the floor section of the vehicle, the seatback is swiveled by the first swivel mechanism from the first upright position to the second upright position which raises the seatback toward the seat front side, and the seatback is swiveled from the second upright position toward the seat rear side. The angle of the second upright position with respect to the seat cushion of the seatback is therefore set to an angle at which the seatback does not interfere with other members of the vehicle, thereby enabling the vehicle seat to be swiveled while avoiding interference between the seatback and other vehicle members. Moreover, due to eliminating the need for the seated occupant to check for interference between the seatback and other members of the vehicle during swiveling of the vehicle seat, even when the vehicle seat is swiveled while a seated occupant remains seated in the vehicle seat, inconvenience to the seated occupant can be avoided.

A vehicle seat according to a second aspect is the first aspect, wherein the first swivel mechanism is configured including a cam section disposed at a seat lower side of the seat cushion, and a swivel member that is coupled to the seatback so as to be capable of swiveling integrally with the seatback, that projects out from the seatback toward a seat lower side, and that includes a sliding portion which constantly contacts a cam face formed to the cam section; and, during swiveling of the seat cushion, the sliding portion slides over the cam face and displaces in a seat longitudinal direction such that the swivel member is swiveled in the seat longitudinal direction.

In the vehicle seat configured as described above, the first swivel mechanism includes the cam section disposed at a seat lower side of the seat cushion, and the swivel member that is coupled to the seatback so as to be capable of swiveling integrally with the seatback. The swivel member includes the sliding portion. The sliding portion projects out from the seatback toward the lower side and constantly contacts the cam face of the cam section. Namely, the sliding portion is disposed at the seat lower side of a swivel axis of the seatback. During swiveling of the seat cushion, the sliding portion slides over the cam face and displaces in a seat longitudinal direction such that the swivel member is swiveled in the seat longitudinal direction. The seatback is thereby swiveled toward the seat front side or the seat rear side with respect to the seat cushion. Thus, by appropriately setting the shape of the cam face, the reclining orientation of the seatback can be easily changed. Thus, the reclining orientation of the seatback can be easily set at each swivel position of the vehicle seat so as to appropriately correspond to members at the periphery of the vehicle seat.

A vehicle seat according to a third aspect is the second aspect, wherein the swivel member is coupled to the seatback through a reclining mechanism.

In the vehicle seat configured as described above, the seatback can be reclined during everyday use of the vehicle seat (at times other than during swiveling of the vehicle seat). Comfort for the seated occupant can thereby be maintained.

A vehicle seat of a fourth aspect is any one of the first to the third aspects, further including: a headrest that is disposed at a seat upper side of the seatback and that supports the head of the seated occupant; a support member that is coupled to an upper end portion of the seatback so as to be capable of swiveling about an axial direction in the seat width direction, that projects out from the seatback toward a seat upper side, and that supports the headrest; and a second swivel mechanism that is coupled to the support member, that swivels the headrest toward the seat rear side when the seatback is swiveled toward the seat front side by the first swivel mechanism, and that swivels the headrest toward the seat front side when the seatback is swiveled toward the seat rear side by the first swivel mechanism.

In the vehicle seat configured as described above, the support member is coupled to the upper end portion of the seatback so as to be capable of swiveling about an axial direction in the seat width direction, i.e. capable of swiveling around an axis parallel to the seat width direction. The support member projects out from the seatback toward a seat upper side and supports the headrest supporting the head of the seated occupant.

The second swivel mechanism is coupled to the support member. When the seatback is being swiveled toward the seat front side by the first swivel mechanism, the headrest is swiveled to the seat rear side by the second swivel mechanism. It can thereby be avoided that the headrest presses the head of the seated occupant toward the seat front side during swiveling of the seatback toward the seat front side. When the seatback is being swiveled toward the seat rear side by the first swivel mechanism, the headrest is swiveled toward the seat front side by the second swivel mechanism. The headrest can thereby be returned to its original position, coupled to swiveling of the seatback toward the first upright position side.

A vehicle seat according to a fifth aspect is the fourth aspect, wherein: the second swivel mechanism includes a link member that couples the seat cushion and the support member together; one end portion of the link member is coupled to the seat cushion so as to be capable of swiveling about an axial direction in the seat width direction, at a position at the seat front side with respect to an axis of swiveling of the seatback; and another end portion of the link member is coupled to the support member so as to be capable of swiveling about an axial direction in the seat width direction, at a position at the seat front side of the support member.

In the vehicle seat configured as described above, one end portion of the link member is coupled to the seat cushion so as to be capable of swiveling around an axis parallel to the seat width direction; and another end portion of the link member is coupled to the support member so as to be capable of swiveling around an axis parallel to the seat width direction. When the seatback swivels, the link member displaces relative to the support member such that the support member is swiveled by the link member with respect to the seatback. This thereby enables the headrest to be coupled to swiveling of the seatback with a simple configuration.

A vehicle according to a sixth aspect includes the vehicle seat of any one of the first to the fifth aspects and an autonomous driving aid device that switches from autonomous driving to manual driving or from manual driving to autonomous driving, wherein the seat cushion adopts a state capable of swiveling with respect to the floor section after switching from manual driving to autonomous driving by the autonomous driving aid device.

In the vehicle configured as described above, when the vehicle has been switched from manual driving to autonomous driving by the autonomous driving aid device, the vehicle seat can be swiveled, enabling the seat layout of the vehicle to be changed.

The vehicle seat according to the first aspect enables ease-of-use to be secured and the vehicle seat to be swiveled while a seated occupant remains seated.

The vehicle seat according to the second aspect enables the reclining orientation of the seatback to be easily set at each swivel position of the vehicle seat so as to appropriately correspond to members at the periphery of the vehicle seat.

The vehicle seat according to the third aspect enables comfort for the seated occupant to be maintained.

The vehicle seat according to the fourth aspect enables avoiding that the head of the seated occupant is pressed toward the seat front side by the headrest when the seatback is being swiveled toward the seat front side, and enables the headrest to be returned to its original position when the seatback is being swiveled toward the seat rear side.

The vehicle seat according to the fifth aspect enables the headrest to be coupled to swiveling of the seatback with a simple configuration.

The vehicle seat according to the sixth aspect enables the vehicle seat to be swiveled when the vehicle is switched from manual driving to autonomous driving, enabling the seat layout of the vehicle to be changed.

### BRIEF DESCRIPTION OF DRAWINGS

Fig. 1 is a side view illustrating an overall vehicle seat according to a first exemplary embodiment as viewed from a seat right side.
Fig. 2 is a schematic plan view illustrating the inside of a vehicle cabin applied with the vehicle seat illustrated in Fig. 1.
Fig. 3 is an explanatory diagram to explain a time series in swiveling of a vehicle seat inside the vehicle cabin illustrated in Fig. 2.
Fig. 4 is an exploded perspective view of a first swivel mechanism from the seatback illustrated in Fig. 1, as viewed from obliquely rearward and to the right of the seat.
Fig. 5 is an enlarged view illustrating a partial cutaway of the sliding portion illustrated in Fig. 4.
Fig. 6 is a side view illustrating a state in which the roller illustrated in Fig. 4 has made contact with a cam face of a cam plate.
Fig. 7A is a perspective view illustrating a state in which a vehicle seat is disposed in a front facing position.
Fig. 7B is a perspective view illustrating a state in which a vehicle seat faces toward a seat width direction central side.
Fig. 7C is a perspective view illustrating a state in which a vehicle seat is disposed in a rear facing position.
Fig. 8 is a side view illustrating a second swivel mechanism disposed inside a vehicle seat according to a second exemplary embodiment, as viewed from the seat right side.
Fig. 9 is a side view to explain swiveling of a headrest when the seatback illustrated in Fig. 8 is swiveled from a first upright position to a second upright position.

### DETAILED DESCRIPTION

### First Exemplary Embodiment

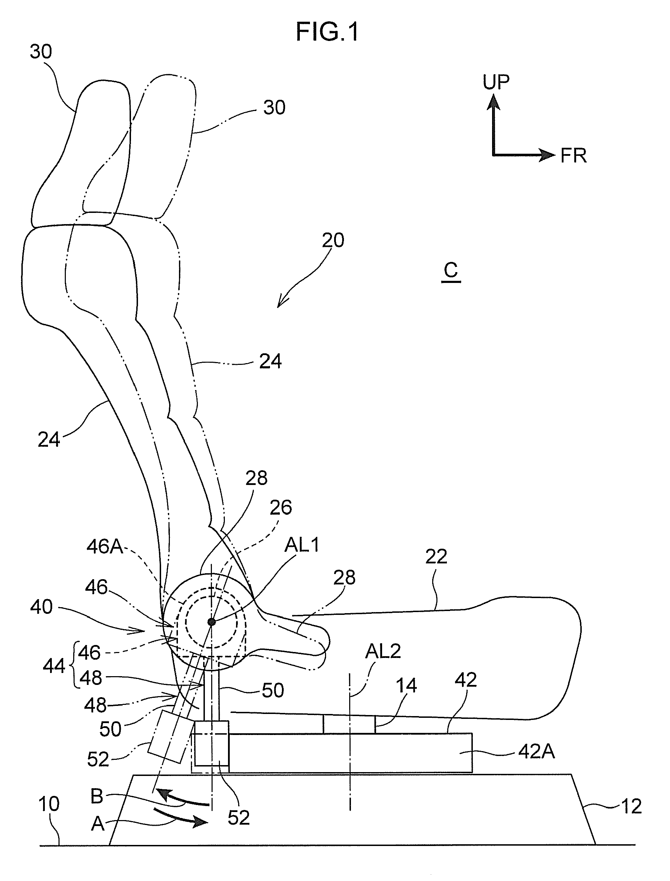

Explanation follows regarding a vehicle seat 20 according to a first exemplary embodiment, with reference to Fig. 1 to Fig. 7. Note that in the drawings, the arrow FR indicates the vehicle front side, the arrow UP indicates the vehicle upper side, and the arrow LH indicates the vehicle left side (one vehicle width direction side) of a vehicle V (automobile) having the vehicle seat 20, as appropriate. First, explanation follows regarding the vehicle V, followed by explanation regarding the vehicle seat 20.

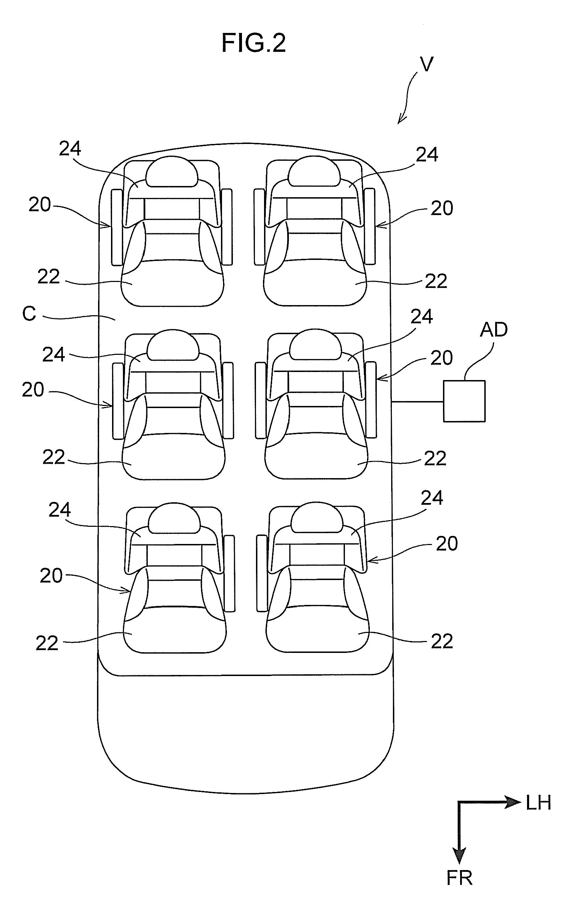

As illustrated in Fig. 2, the vehicle V includes an autonomous driving aid device AD, and the vehicle V is switched from manual driving to autonomous driving, and from autonomous driving to manual driving, by the autonomous driving aid device AD. The vehicle V is configured as what is called a three-row seat vehicle. Namely, pairs of left and right vehicle seats 20 that are side-by-side in the vehicle width direction are disposed in three rows in the vehicle longitudinal direction inside a cabin C (inside a vehicle cabin) of the vehicle V. The left and right vehicle seats 20 in a pair are disposed in the cabin C at a specific spacing from each other in the vehicle width direction. In Fig. 2, the vehicle seat 20 is disposed in a state facing toward the vehicle front side, and in this state, the seat front side, the seat upper side, and the seat left side of the vehicle seat 20 are respectively parallel to the vehicle front side, the vehicle upper side, and the vehicle left side of the vehicle V.

As illustrated in Fig. 1, a base 12 is provided for mounting each of the vehicle seats 20 to a floor section 10 of the vehicle V. Namely, in the present exemplary embodiment, the bases 12 are provided at six locations on the floor section 10 of the vehicle V. The bases 12 protrude toward the vehicle upper side with respect to the floor section 10 of the vehicle V. Each of the bases 12 is formed with a substantially trapezoidal shape in side view, and upper faces of the respective bases 12 are disposed substantially horizontally. However, other shapes are possible. A cam plate 42 included in a first swivel mechanism 40, described later, is fixed to each of the upper faces of the bases 12. A support shaft 14 which supports a seat cushion 22 so as to be capable of swiveling, described later, is provided to each base 12. Each support shaft 14 is formed in a substantially circular column shape with an axial direction in the vehicle vertical direction. An upper end portion of each support shaft 14 projects out toward the vehicle upper side with respect to the base 12 and the cam plate 42.

### Vehicle Seat 20

As illustrated in Fig. 1, the vehicle seat 20 is includes the seat cushion 22 that supports the posterior of a seated occupant, a seatback 24 that supports the back of a seated occupant, and a headrest 30 that supports the head of a seated occupant. The vehicle seat 20 further includes the first swivel mechanism 40 that swivels (reclines) the seatback 24 with respect to the seat cushion 22 when the vehicle seat 20 swivels.

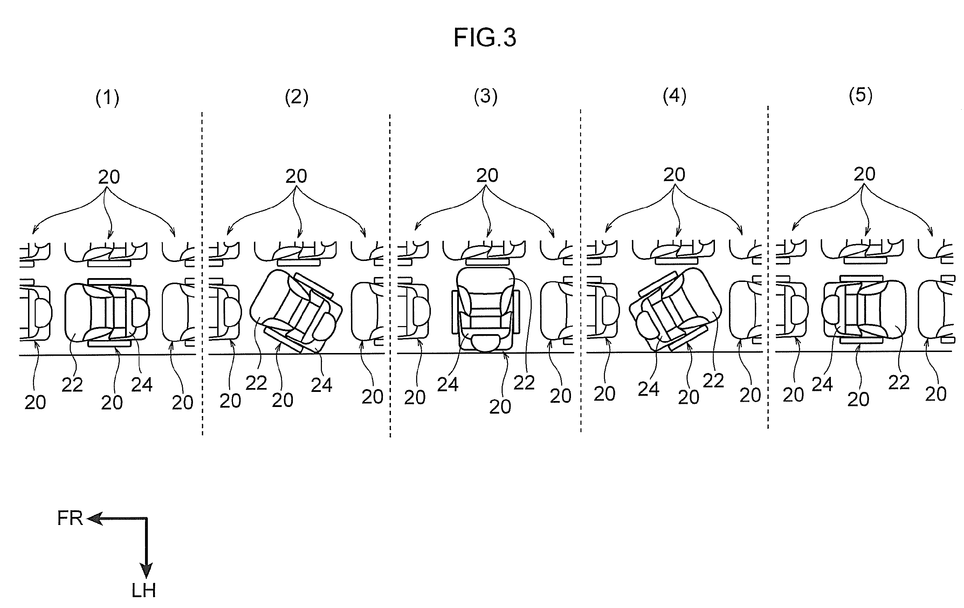

The seat cushion 22 is disposed at the vehicle upper side of the base 12, and the seat cushion 22 is coupled to an upper end portion of the support shaft 14 so as to be capable of swiveling. In the present exemplary embodiment, as illustrated in Fig. 3, the seat cushion 22 (the vehicle seat 20) is configured so as to be capable of swiveling from a state facing toward the vehicle front side (state (1) illustrated in Fig. 3, a position referred to below as a front facing position), through states facing toward the vehicle width direction central side (states (2) to (4) illustrated in Fig. 3, positions referred to below as swivel positions), to a state facing toward the vehicle rear side (state (5) illustrated in Fig. 3, a position referred to below as a rear facing position). The seat cushion 22 (the vehicle seat 20) is moreover configured so as to be capable of swiveling from the rear facing position through the swivel positions to the front facing position. Note that the vehicle seat 20 illustrated in Fig. 3 is the seat that is in the second row from the vehicle front side and that is disposed at the vehicle left side; however, the other vehicle seats 20 are similarly configured so as to be capable of swiveling.

The seat cushion 22 (the vehicle seat 20) may be configured so as to be swiveled manually, or may be configured so as to be swiveled electrically by a motor or the like. The seat cushion 22 is provided with a lock mechanism, not illustrated in the drawings, and the lock mechanism restricts the seat cushion 22 (the vehicle seat 20) from swiveling at the front facing position and at the rear facing position of the vehicle seat 20. In the present exemplary embodiment, the swivel restricted state of the seat cushion 22 by the lock mechanism is released when the vehicle V is switched from manual driving to autonomous driving by the autonomous driving aid device AD, and the seat cushion 22 is allowed to swivel with respect to the floor section 10. When the vehicle seat 20 swivels, the distance between the members disposed at the periphery of the vehicle seat and the vehicle seat 20, described later, is set to be narrowest at the swivel positions (2) to (4) of the vehicle seat 20.

As illustrated in Fig. 1 to Fig. 4, a lower end portion of the seatback 24 is coupled to a rear end portion of the seat cushion 22 so as to be capable of swiveling about an axial direction in the seat width direction, i.e. capable of swiveling around an axis parallel to the seat width direction. Specifically, the seatback 24 is configured so as to be capable of swiveling about a swivel axis formed by an axial line AL1 that runs along the seat width direction. The seatback 24 is retained in an upright state with respect to the seat cushion 22 by the first swivel mechanism 40, described later. Specifically, the seatback 24 is retained in a state reclined at a specific angle toward the seat rear side with respect to the seat vertical direction (a position illustrated by solid lines in Fig. 1, and a position of the seatback 24 referred to below as a "first upright position"). A conventional reclining mechanism 26 is fixed to a lower end portion of the seatback 24 at a side portion on one seat width direction side, and the conventional reclining mechanism 26 is disposed coaxially with respect to the axial line AL1. An operation lever 28 that operates the reclining mechanism 26 is provided on one seat width direction side of the conventional reclining mechanism 26. Although not illustrated in the drawings, the seatback 24 is thereby disposed in a reclined position reclined toward the seat rear side with respect to the first upright position by actuating the reclining mechanism 26.

In a state in which the seatback 24 is disposed at a reclined position, when the retained state of the seatback 24 by the reclining mechanism 26 is released using the operation lever 28, the seatback 24 swivels from the reclined position toward the seat front side, so as to stop at the first upright position. Namely, the position of the seatback 24 when swiveled by the reclining mechanism 26 furthest toward the seat front side, within a reclining range for retaining the seatback 24 within the specific angle range, is the first upright position.

The headrest 30 is provided on a seat upper side of an upper end portion of the seatback 24. The headrest 30 includes headrest stays, not illustrated in the drawings. Lower end portions of the headrest stays project out from the headrest 30 toward the seat lower side, and are supported by the upper end portion of the seatback 24.

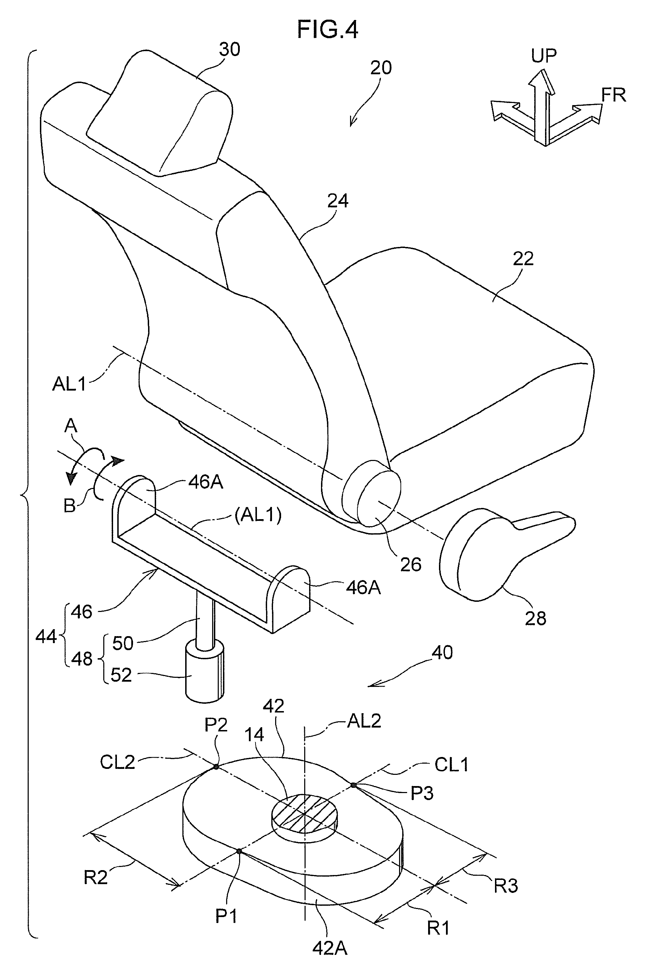

Next, explanation follows regarding the first swivel mechanism 40, this being a relevant component of the present invention. As illustrated in Fig. 4, the first swivel mechanism 40 includes the cam plate 42 serving as a "cam section", and a swivel member 44.

The cam plate 42 is formed in a substantially oval or elliptical plate shape, and is fixed to the upper face of the base 12 (see Fig. 1) with its plate thickness direction in the seat vertical direction. The support shaft 14, described above, pierces through the cam plate 42. A side face of the cam plate 42 forms a cam face 42A, and a roller 52 of a sliding section 48, described later, is configured so as to slide over the cam face 42A.

Explanation follows regarding the positional relationship between the cam face 42A and the support shaft 14. First, in plan view, let an imaginary line that passes through an axial line AL2 of the support shaft 14 and that extends in the vehicle longitudinal direction be a first reference line CL1, and let an imaginary line that passes through the axial line AL2 and that extends in the vehicle width direction be a second reference line CL2. In plan view, an intersection point, which is the intersection point between the first reference line CL1 and the cam face 42A and which is positioned on the vehicle rear side of the second reference line CL2 is a first intersection point P1, an intersection point, which is the intersection point between the second reference line CL2 and the cam face 42A and which is positioned on the vehicle width direction outside of the first reference line CL1 is a second intersection point P2, and an intersection point, which is the intersection point between the first reference line CL1 and the cam face 42A and which is positioned on the vehicle front side of the second reference line CL2 is a third intersection point P3.

The shape of the cam face 42A of the cam plate 42 is set such that a distance R2 between the axial line AL2 and the second intersection point P2 is larger than a distance R1 between the axial line AL2 of the support shaft 14 and the first intersection point P1. Moreover, the shape of the cam face 42A of the cam plate 42 is set such that a distance R2 between the axial line AL2 and the second intersection point P2 is larger than a distance R3 between the axial line AL2 and the third intersection point P3. Specifically, the distance from the axial line AL2 to the cam face 42A is set so as to increase on progression from the first intersection point P1 toward the second intersection point P2, and so as to decrease on progression from the second intersection point P2 toward the third intersection point P3. The distance from the axial line AL2 to the cam face 42A may be set to be the longest at the second intersection point P2. The distance from the axial line AL2 to the cam face 42A may be set to be the shortest at one or both of the first intersection point P1 and the third intersection point P3. Note that the distance R1 and the distance R3 may be set to the same distance, or may be set as different distances to each other. In the present exemplary embodiment, the cam plate 42 is formed in a shape in plan view with longitudinal symmetry with respect to the second reference line CL2, and the distance R1 and the distance R3 are set to the same distance as each other. Variations are however possible.

The swivel member 44 includes a swivel body 46 and the sliding section 48. The swivel body 46 is formed in a substantially elongated plate shape, and the swivel body 46 is disposed with its length direction in the seat width direction and its plate thickness direction in the seat vertical direction. Both length direction end portions of the swivel body 46 are provided with a coupling portion 46A, and each coupling portion 46A is bent toward the seat upper side. The coupling portion 46A on one length direction side of the swivel body 46 is disposed at the seat width direction outside of the reclining mechanism 26 and is fixed to the reclining mechanism 26. The coupling portion 46A on the other length direction side of the swivel body 46 is coupled to a side portion of the lower end of the seatback 24 on the other seat width direction side so as to be capable of swiveling, and the coupling portions 46A are configured so as to be capable of swiveling relative to the seatback 24 about a swivel axis aligned with the axial line AL1. Portions of the swivel body 46 other than the coupling portions 46A are thereby disposed at the seat lower side of the seatback 24, in a configuration in which the seatback 24 and the swivel member 44 swivel as a unit about the swivel axis aligned with the axial line AL1 in a non-actuated state of the reclining mechanism 26. When the operation lever 28 is operated and the reclining mechanism 26 actuates, the seatback 24 becomes capable of swiveling relative to the swivel member 44, in a configuration in which the seatback 24 swivels about the swivel axis aligned with the axial line AL1 relative to the seat cushion 22.

The sliding section 48 includes a shaft 50, which may be formed in a substantially circular column shape, and the roller 52 which is supported by the shaft 50 so as to be capable of swiveling.

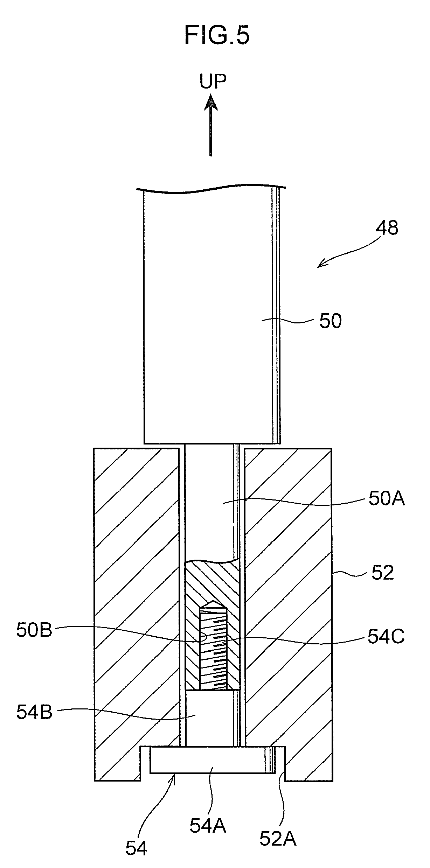

The shaft 50 is disposed with an axial direction in the seat vertical direction, and an upper end of the shaft 50 is fixed to a lower face of the swivel body 46 at a seat width direction central portion of the lower face. The shaft 50 thereby projects out toward the seat lower side with respect to the seatback 24. As illustrated in Fig. 5, the shaft 50 is configured as a stepped shaft. Specifically, the diameter dimension of a lower end portion of the shaft 50 is set smaller than the diameter dimension on the upper end side of the shaft 50. The lower end portion of the shaft 50 set with a smaller diameter dimension forms a roller support portion 50A. A recess 50B with a circular cross-section open toward the seat lower side is formed at a lower face of the roller support portion 50A, and a female thread is formed to an inner peripheral face of the recess 50B.

The roller 52 is formed in a substantially circular column shape. The roller 52 is disposed coaxially to the roller support portion 50A of the shaft 50, and the roller support portion 50A is inserted inside the roller 52 so as to be capable of swiveling relative to the roller 52. Namely, the roller 52 is configured so as to be capable of swiveling about the axis of the roller support portion 50A. A recess 52A open toward the seat lower side is formed at a lower face of the roller 52.

A screw 54 is screwed onto the lower end portion of the roller support portion 50A, such that the roller 52 is prevented from detaching from the roller support portion 50A by the screw 54. The screw 54 is configured as a stepped screw, and includes a head portion 54A, a shaft portion 54B, and a screw 54C. The head portion 54A is formed in a substantially circular plate shape and the head portion 54A is disposed inside the recess 52A of the roller 52. Moreover, the shaft portion 54B is formed in a substantially circular column shape. The shaft portion 54B is disposed coaxially to the head portion 54A and projects out from the head portion 54A toward the seat upper side. The diameter dimension of the shaft portion 54B is set to the same dimension as the diameter dimension of the roller support portion 50A, and the shaft portion 54B is disposed inside the roller 52 in a state in which an upper face of the shaft portion 54B makes contact with the lower face of the roller support portion 50A. The screw 54C projects out from the upper face of the shaft portion 54B toward the seat upper side, and a male thread formed on the outer periphery of the screw 54C is screwed together with the female thread of the roller support portion 50A.

As illustrated in Fig. 1, the outer peripheral face of the roller 52 of the sliding section 48 makes contact with the cam face 42A of the cam plate 42 described above. Specifically, in the front facing position of the vehicle seat 20, the outer peripheral face of the roller 52 makes contact with the location of the cam face 42A corresponding to the first intersection point P1. Namely, the roller 52 is disposed adjacent to the seat rear side of the cam plate 42.

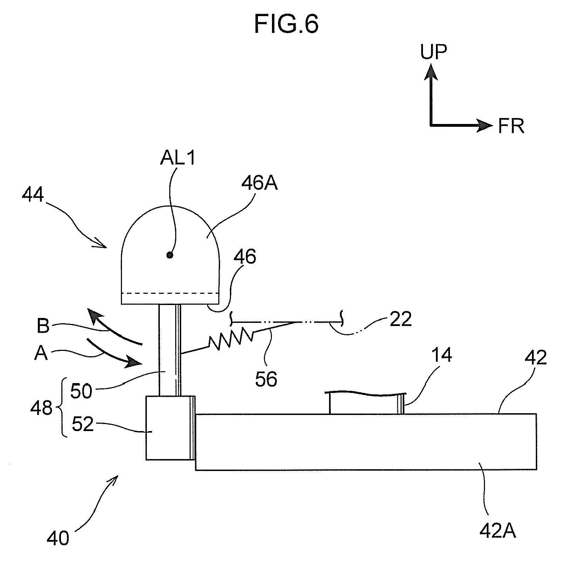

As illustrated in Fig. 6, the first swivel mechanism 40 includes a biasing spring 56 configured as a tension spring. One end portion of the biasing spring 56 is anchored to the upper end side of the shaft 50 and the other end portion of the biasing spring 56 is anchored to the seat cushion 22. The shaft 50 (the swivel member 44) is biased toward the seat front side (the arrow A direction side in Fig. 6) by the biasing spring 56. The roller 52 is thereby maintained in a state of contact with the cam face 42A such that the seatback 24 is retained in the first upright position by the first swivel mechanism 40 (see Fig. 1). When the vehicle seat 20 is swiveled with respect to the floor section 10, the roller 52 slides over the cam face 42A. Note that the above biasing spring 56 is configured as a tension spring. However, configuration of the biasing spring 56 is not limited thereto. For example, the biasing spring 56 may be configured as a torsion spring.

When the vehicle seat 20 is swiveled in a state in which the vehicle seat 20 faces the seat width direction central side (swivel position (3) in Fig. 3), the outer peripheral face of the roller 52 is set so as to contact the location corresponding to the second intersection point P2 of the cam face 42A (see Fig. 4). As mentioned above, the distance from the axial line AL2 of the support shaft 14 to the cam face 42A is set so as to increase on progression from the first intersection point P1 toward the second intersection point P2. When the vehicle seat 20 is swiveled from the front facing position of the vehicle seat 20 to a state facing toward the vehicle width direction central side, the roller 52 (namely, the lower end portion of the shaft 50) is thereby pressed by the cam face 42A so as to displace toward the seat rear side. The swivel member 44 is thereby swiveled about the axial line AL1 toward one swivel direction side (arrow B direction side in Fig. 1 and Fig. 6) such that the seatback 24 is swiveled about the axial line AL1 toward the seat front side. Specifically, the seatback 24 is raised from the first upright position toward the seat front side, so as to be swiveled to the position illustrated by double-dotted intermittent lines in Fig. 1. The position of the seatback 24 is then the "second upright position".

The outer peripheral face of the roller 52 is set so as to make contact with the location of the cam face 42A corresponding to the third intersection point P3 when the vehicle seat 20 has been swiveled further to the rear facing position. As mentioned above, the distance from the axial line AL2 of the support shaft 14 to the cam face 42A is set to decrease on progression from the second intersection point P2 toward the third intersection point P3. The roller 52 (namely, the lower end portion of the shaft 50) thereby displaces along the cam face 42A toward the seat front side when the vehicle seat 20 is being swiveled from a state facing toward the vehicle width direction central side to the rear facing position. The swivel member 44 is thereby swiveled about the axial line AL1 toward the other swivel direction side (the arrow A direction side in Fig. 1 and Fig. 6), such that the seatback 24 is swiveled toward the seat rear side about the axial line AL1. Specifically, the seatback 24 is returned from the second upright position to the first upright position. The swivel angle of the seat cushion 22 is appropriately set such that the seatback 24 does not interfere with members at the periphery of the vehicle seat 20 during swiveling of the vehicle seat 20. Namely, the cam face 42A of the cam plate 42 is formed such that the seatback 24 does not interfere with the members at the periphery of the vehicle seat 20.

Next, explanation follows regarding operation and advantageous effects of the present exemplary embodiment.

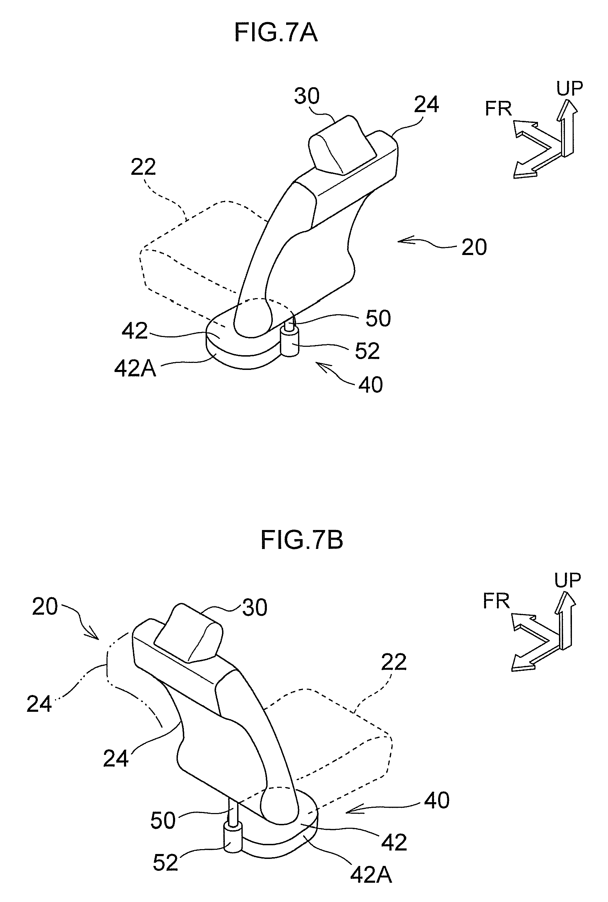

In the vehicle seat 20 configured as described above, as illustrated in Fig. 7A, the seatback 24 at the front facing position is disposed at the first upright position. In this state, the outer peripheral face of the roller 52 of the first swivel mechanism 40 contacts the location of the cam face 42A of the cam plate 42 corresponding to the first intersection point P1 (see Fig. 4)

In a state in which the swivel restricted state of the seat cushion 22 by the lock mechanism has been released, when the vehicle seat 20 is caused to swivel from the front facing position toward the rear facing position, the vehicle seat 20 is swiveled through the swivel positions facing toward the vehicle width direction central side to the rear facing position. The outer peripheral face of the roller 52 of the first swivel mechanism 40 thereby slides over the cam face 42A from the location of the cam face 42A corresponding to the first intersection point P1 toward the location corresponding to the second intersection point P2 (see Fig. 4). When the vehicle seat 20 has reached a state facing toward the vehicle width direction central side (the state illustrated in Fig. 7B), the outer peripheral face of the roller 52 reaches the location of the cam face 42A corresponding to the second intersection point P2.

In the cam plate 42, the distance from the axial line AL2 of the support shaft 14 to the cam face 42A is set so as to increase on progression from the first intersection point P1 toward the second intersection point P2. Thus, when the vehicle seat 20 is being swiveled from the front facing position to a state facing toward the vehicle width direction central side, the roller 52 (namely, the lower end portion of the shaft 50) is pressed by the cam face 42A and displaces toward the seat rear side. The swivel member 44 is accordingly swiveled about the axial line AL1 toward the one swivel direction side (the arrow B direction side illustrated in Fig. 1 and Fig. 6), such that the seatback 24 is swiveled (is raised) from the first upright position (see the seatback 24 illustrated by double-dotted intermittent lines in Fig. 7B) to the second upright position (see the seatback 24 illustrated by solid lines in Fig. 7B).

When the vehicle seat 20 is swiveled further from a state facing toward the vehicle width direction central side and is swiveled to the rear facing position, the outer peripheral face of the roller 52 slides over the cam face 42A of the cam plate 42 from the location of the cam face 42A corresponding to the second intersection point P2 toward the location corresponding to the third intersection point P3 (see Fig. 4). When the vehicle seat 20 has reached the rear facing position, the outer peripheral face of the roller 52 reaches the location corresponding to the third intersection point P3 of the cam face 42A.

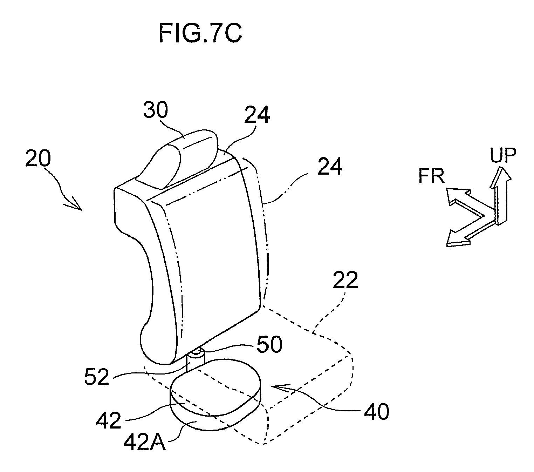

In the cam plate 42, the distance from the axial line AL2 of the support shaft 14 to the cam face 42A is set so as to decrease on progression from the second intersection point P2 toward the third intersection point P3. Thus, when the vehicle seat 20 is swiveled from a state facing toward the vehicle width direction central side to the rear facing position, the roller 52 (namely, the lower end portion of the shaft 50) displaces along the cam face 42A toward the seat front side. The swivel member 44 is accordingly swiveled about the axial line AL1 toward the other swivel direction side (the arrow A direction side illustrated in Fig. 1 and Fig. 6), and the seatback 24 is swiveled from the second upright position (see the seatback 24 illustrated by double-dotted intermittent line in Fig. 7C) to the first upright position (see the seatback 24 illustrated by solid lines in Fig. 7C).

According to the vehicle seat 20 of the present exemplary embodiment, when the vehicle seat 20 is being swiveled with respect to the floor section 10 of the vehicle V in this manner, the seatback 24 is swiveled (raised) from the first upright position toward the seat front side by the first swivel mechanism 40, and is thereby disposed at the second upright position and swiveled from the second upright position toward the seat rear side. The swivel angle of the seatback 24 is set such that the seatback 24 and other members in the vehicle V do not interfere during swiveling of the vehicle seat 20. Thus interference can be avoided between the seatback 24 and other members of the vehicle V during swiveling of the vehicle seat 20. Furthermore, due to eliminating the need for the seated occupant to check for interference between the seatback 24 and other members of the vehicle V during swiveling of the vehicle seat 20, even when the vehicle seat 20 is swiveled while a seated occupant remains seated in the vehicle seat 20, inconvenience to the seated occupant can be avoided. According to the above, the vehicle seat 20 can be swiveled while the seated occupant remains seated while securing ease-of-use for the seated occupant.

In the cam plate 42 of the present exemplary embodiment, the distance from the axial line AL2 of the support shaft 14 to the cam face 42A is set so as to be the greatest at the second intersection point P2. Namely, when the vehicle seat 20 faces the vehicle width direction central side, the seatback 24 is disposed at the second upright position, and there is the greatest swivel angle of the seatback 24 from the first upright position. Thus although there is a tendency for the distance between the seatback 24 and other members of the vehicle V, such as the door trim, to be smaller in vehicles with comparatively small vehicle width direction dimensions when the vehicle seat 20 faces toward the vehicle width direction central side, interference between the seatback 24 and other members such as the door trim can accordingly be effectively avoided, even in such a vehicle V.

As described above, during swiveling of the vehicle seat 20, the roller 52 of the first swivel mechanism 40 slides over the cam face 42A, and the shaft 50 displaces in the seat longitudinal direction such that the seatback 24 swivels in the seat longitudinal direction. The reclining orientation of the seatback 24 can thereby be easily changed by appropriately setting the shape of the cam face 42A of the cam plate 42. Namely, the reclining orientation (swivel angle) of the seatback 24 at each swivel position of the vehicle seat 20 can easily be set to appropriately corresponding to the members at the periphery of the vehicle seat 20.

The seatback 24 is coupled to the swivel member 44 through the reclining mechanism 26. During regular use of the vehicle seat 20 (at times other than during swiveling), the seatback 24 can thereby be disposed at a reclined position reclined toward the seat rear side with respect to the first upright position by operating the operation lever 28. Note that when the seatback 24 is disposed in a reclined position, the retained state of the reclining mechanism 26 with respect to the seatback 24 is released by operating the operation lever 28, so as to allow the vehicle seat 20 to swivel after the seatback 24 has returned to the first upright position. For example, in cases in which the vehicle seat 20 is caused to swivel electrically by a motor or the like, the retained state of the reclining mechanism 26 may be automatically released by driving the motor, and the vehicle seat 20 may be swiveled after the seatback 24 has returned to the first upright position.

### Second Exemplary Embodiment

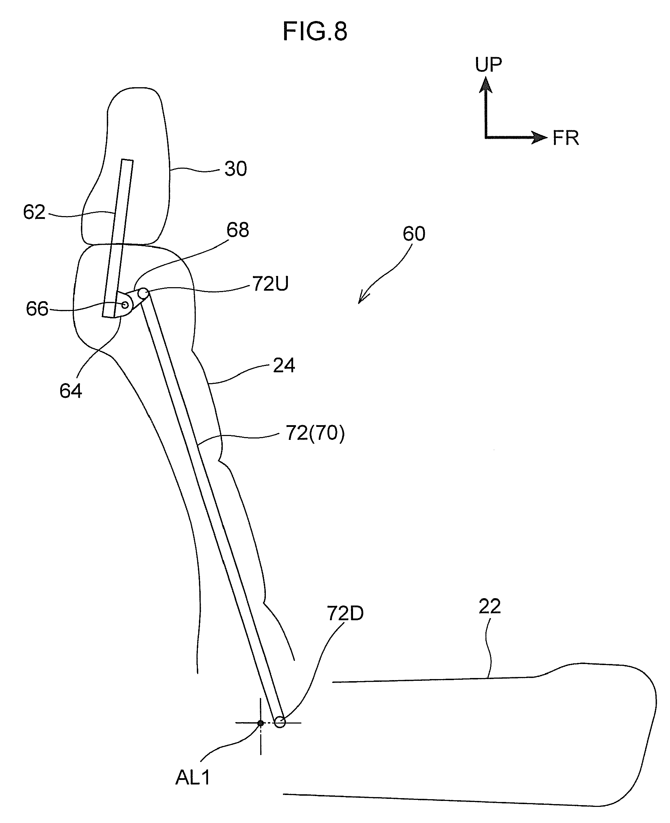

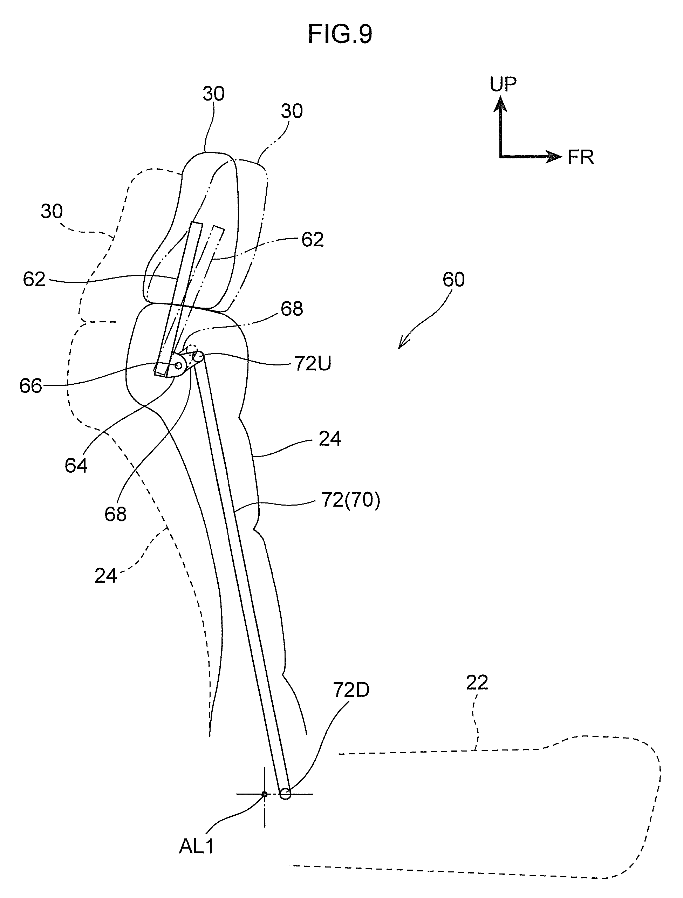

Explanation follows regarding a vehicle seat 60 according to a second exemplary embodiment, with reference to Fig. 8 and Fig. 9. The vehicle seat 60 of the second exemplary embodiment is configured similarly to the vehicle seat 20 of the first exemplary embodiment, with the exception of the following points.

Namely, as illustrated in Fig. 8, the vehicle seat 60 includes a second swivel mechanism 70. During swiveling of the vehicle seat 60, the headrest 30 is configured to be swiveled with respect to the seatback 24 by the second swivel mechanism 70 coupled to the swiveling of the seatback 24. Specific explanation follows.

The vehicle seat 60 includes a support member 62 that supports the headrest 30. The support member 62 extends substantially in the seat vertical direction in seat side view. An attachment portion 64 is integrally formed to a lower end portion of the support member 62, and the attachment portion 64 projects out from the support member 62 toward the seat front side. A coupling shaft 66 is provided inside an upper end portion of the seatback 24, with its axial direction in the seat width direction. The attachment portion 64 is supported by the coupling shaft 66 so as to be capable of swiveling.

A portion on the upper end side of the support member 62 projects out from the seatback 24 toward the seat upper side. A lower end portion of the headrest 30 is fixed to an upper end side portion of the support member 62. The headrest 30 is thereby supported by the support member 62 so as to be configured capable of swiveling about an axis of the coupling shaft 66 relative to the seatback 24.

A link coupling portion 68 for coupling with a link bar 72, described later, is integrally formed to the support member 62. The link coupling portion 68 projects out from the attachment portion 64 toward the seat front side and the link coupling portion 68 is disposed at the seat upper side with respect to the axial line of the coupling shaft 66.

The second swivel mechanism 70 includes the link bar 72 as a "link member" formed in a substantially rod shape. The link bar 72 is disposed inside the seatback 24 and extends along the seatback 24, substantially in the seat vertical direction in seat side view. Specifically, the link bar 72 is disposed angled toward the seat rear side in seat side view on progression toward the seat upper side. A lower end portion 72D (one end portion) of the link bar 72 is disposed inside the seat cushion 22, and is disposed at the seat front side with respect to the axial line AL1, the axial line ALlbeing a swivel axis of the seatback 24. The lower end portion 72D of the link bar 72 is coupled to the seat cushion 22 so as to be capable of swiveling about an axial direction in the seat width direction, i.e. capable of swiveling around an axis parallel to the seat width direction. An upper end portion 72U (the other end portion) of the link bar 72 is coupled to a front end portion (a leading end portion) of the link coupling portion 68 of the support member 62 so as to be capable of swiveling about an axial direction in the seat width direction, i.e. capable of swiveling around an axis parallel to the seat width direction. Namely, the upper end portion 72U of the link bar 72 is disposed at the seat front side of the support member 62 (specifically, the coupling shaft 66), and is disposed at the seat upper side with respect to the axial line of the coupling shaft 66.

As illustrated in Fig. 9, in the second exemplary embodiment as well, when swiveling the vehicle seat 60 from the front facing position toward a state facing toward the seat width direction central side, similarly to the first exemplary embodiment, the seatback 24 swivels from the first upright position (the position illustrated by the dotted lines in Fig. 9) toward the seat front side, so as to be disposed at the second upright position (the position illustrated by solid lines in Fig. 9). When this is performed, the upper end portion of the seatback 24 (namely, the link coupling portion 68 of the support member 62 and the upper end portion 72U of the link bar 72) displaces mainly toward the seat front side. The lower end portion 72D of the link bar 72 does not displace in the seat longitudinal direction nor in the seat vertical direction due to being coupled to the seat cushion 22 so as to be capable of swiveling. The link bar 72 thereby swivels about the lower end portion 72D so as to stand up toward the seat front side, and the upper end portion 72U of the link bar 72 displaces toward the seat upper side relative to the coupling shaft 66. The support member 62 thereby swivels about the axis of the coupling shaft 66, and the headrest 30 swivels with respect to the seatback 24 toward the seat rear side (swivels from the state illustrated by double-dotted intermittent lines to the state illustrated by solid lines in Fig. 9). As a result, in the second exemplary embodiment, it can be avoided that the headrest 30 presses the head of the seated occupant toward the seat front side when the seatback 24 is moved from the first upright position to the second upright position.

When the vehicle seat 60 is swiveling from a state facing toward the seat width direction central side to the rear facing position, similarly to the first exemplary embodiment, the seatback 24 swivels from the second upright position toward the seat rear side and is disposed at the first upright position. When this is performed, the upper end portion of the seatback 24 (namely, the link coupling portion 68 of the support member 62 and the upper end portion 72U of the link bar 72) displaces mainly toward the seat rear side. As described above, the lower end portion 72D of the link bar 72 does not displace in the seat longitudinal direction nor in the seat vertical direction due to being coupled to the seat cushion 22 so as to be capable of swiveling. The link bar 72 therefore swivels so as to tilt about the lower end portion 72D toward the seat rear side, and the upper end portion 72U of the link bar 72 displaces relative to the coupling shaft 66 toward the seat lower side. The support member 62 thereby swivels about the coupling shaft 66, and the headrest 30 swivels with respect to the seatback 24 toward the seat front side, returning to its original position. Thus, when the vehicle seat 20 has been swiveled to the rear facing position, the headrest 30 returns to its original position, enabling the head of the seated occupant to be supported by the headrest 30.

In the second exemplary embodiment, the second swivel mechanism 70 includes the link bar 72, and the headrest 30 can be made to swivel with respect to the seatback 24 coupled by the link bar 72 to swiveling of the seatback 24. The headrest 30 can thereby be made to swivel with respect to the seatback 24 coupled to swiveling of the seatback 24 using a simple configuration.

Note that in the first exemplary embodiment, the first swivel mechanism 40 includes the swivel member 44 and the cam plate 42, and the seatback 24 is configured to be made to swivel in the seat longitudinal direction by the first swivel mechanism 40 during swiveling of the vehicle seat 20. However, configuration of the first swivel mechanism 40 is not limited thereto. For example, in a vehicle seat provided with what is referred to as an electric reclining mechanism that swivels the seatback using drive from a motor, the electric reclining mechanism may serve as the first swivel mechanism. In such cases, the vehicle seat is provided with a controller that drives the motor of the electric reclining mechanism, and an angle sensor that detects the swivel angle of the vehicle seat (the seat cushion). During swiveling of the vehicle seat, the controller may actuate the motor based on a signal output from the angle sensor, and the seatback may be made to swivel in the seat longitudinal direction. In cases in which the seatback is disposed at a reclined position, the seatback may be returned to the first upright position before then swiveling the vehicle seat, and the seatback may be swiveled from the first upright position to the second upright position while swiveling the vehicle seat. Moreover, the seatback may be swiveled from the reclined position to the second upright position while the vehicle seat is swiveling.

In the second exemplary embodiment, the second swivel mechanism 70 is provided with the link bar 72, and the headrest 30 is swiveled in the seat longitudinal direction by the second swivel mechanism 70 during swiveling of the seatback 24. However, the configuration of the second swivel mechanism 70 is not limited thereto. For example, the second swivel mechanism may be a swivel mechanism including a motor that swivels the coupling shaft 66 such that the coupling shaft 66 is made to swivel by actuating the motor, swiveling the headrest 30 with respect to the seatback 24. In such cases, similarly to the above, the vehicle seat 60 is provided with a controller that drives a motor of the second swivel mechanism and an angle sensor that detects the swivel angle of the vehicle seat 60 (the seat cushion 22). Then during swiveling of the vehicle seat 60, the controller may actuate the motor based on a signal output from the angle sensor, and the headrest 30 may be swiveled in the seat longitudinal direction with respect to the seatback 24.

In the first exemplary embodiment and in the second exemplary embodiment, in plan view, the shape of the cam plate 42 (cam face 42A) is set so that the distance from the axial line AL2 of the support shaft 14 to the cam face 42A increases on progression from the first intersection point P 1 toward the second intersection point P2, and is the greatest at the second intersection point P2, and so as to decrease on progression from the second intersection point P2 toward the third intersection point P3. However, the shape of the cam plate 42 (cam face 42A) may be changed as appropriate. Namely, the shape of the cam plate 42 (cam face 42A) may be changed as appropriate according to the members at the periphery of the vehicle seats 20, 60. For example, the seatback 24 may be changed so as to lengthen the period the seatback 24 is disposed in the second upright position.

In the first exemplary embodiment and in the second exemplary embodiment, the vehicle seats 20, 60 are applied in what is referred to as a three-row seat vehicle V; however, the vehicle seats 20, 60 may be applied to other vehicles such as a two-row seat vehicle.

### Explanation of the Reference Signs

- 10: floor section
- 20: vehicle seat
- 22: seat cushion
- 24: seatback
- 26: reclining mechanism
- 30: headrest
- 40: first swivel mechanism
- 42: cam plate (cam section)
- 42A: cam face
- 44: swivel member
- 48: sliding section
- 60: vehicle seat
- 62: support member
- 70: second swivel mechanism
- 72: link bar (link member)
- AD: Autonomous driving aid device
- V: Vehicle

## Claims

1. A vehicle seat (20) comprising:
a seat cushion (22) configured to be coupled to a floor section (10) of a vehicle so as to be capable of swiveling about an axial direction in a seat vertical direction and to support the posterior of a seated occupant;
a seatback (24) that is coupled to a rear end portion of the seat cushion (22) so as to be capable of swiveling about an axial direction in a seat width direction and configured to support the back of the seated occupant; and
a first swivel mechanism (40) that is coupled to the seatback (24) and that retains the seatback (24) in a first upright position upright with respect to the seat cushion (22), the first swivel mechanism (40) being configured to, during swiveling of the seat cushion (22), swivel the seatback (24) from the first upright position to a second upright position raised toward a seat front side and to swivel the seatback (24) from the second upright position toward a seat rear side.

2. The vehicle seat (20) of claim 1, wherein:
the first swivel mechanism (40) includes
a cam section (42A) disposed at a seat lower side of the seat cushion (22), and
a swivel member (44) that is coupled to the seatback (24) so as to be capable of swiveling integrally with the seatback (24), that projects out from the seatback (24) toward a seat lower side, and that comprises a sliding portion (48) which constantly contacts a cam face formed to the cam section (42A); and,
the first swivel mechanism (40) is configured such that, during swiveling of the seat cushion (22), the sliding portion (48) slides over the cam face and displaces in a seat longitudinal direction such that the swivel member (44) is swiveled in the seat longitudinal direction.

3. The vehicle seat (20) of claim 2, wherein:
the swivel member (44) is coupled to the seatback (24) through a reclining mechanism (26).

4. The vehicle seat (20) of any of claim 1 to claim 3, further comprising:
a headrest (30) that is disposed at a seat upper side of the seatback (24) and configured to support the head of the seated occupant;
a support member (62) that is coupled to an upper end portion of the seatback (24) so as to be capable of swiveling about an axial direction in the seat width direction, that projects out from the seatback (24) toward a seat upper side, and that supports the headrest (30); and
a second swivel mechanism (70) that is coupled to the support member (62), configured to swivel the headrest (30) toward the seat rear side when the seatback (24) is swiveled toward the seat front side by the first swivel mechanism (40), and to swivel the headrest (30) toward the seat front side when the seatback (24) is swiveled toward the seat rear side by the first swivel mechanism (40).

5. The vehicle seat (20) of claim 4, wherein:
the second swivel mechanism (70) comprises a link member (72) that couples the seat cushion (22) and the support member (62) together;
one end portion of the link member (72) is coupled to the seat cushion (22) so as to be capable of swiveling about an axial direction in the seat width direction, at a position at the seat front side with respect to an axis of swiveling of the seatback (24); and
another end portion of the link member (72) is coupled to the support member (62) so as to be capable of swiveling about an axial direction in the seat width direction, at a position at the seat front side of the support member (62).

6. A vehicle (V) comprising:
the vehicle seat (20) of any of claim 1 to claim 5; and
an autonomous driving aid device (AD) that switches from autonomous driving to manual driving or from manual driving to autonomous driving, wherein
the seat cushion (22) is configured to adopt a state capable of swiveling with respect to the floor section (10) after switching from manual driving to autonomous driving by the autonomous driving aid device (AD).
